# EUROPÄISCHE PATENTANMELDUNG

(11) **EP 1 557 923 A1**
(43) Veröffentlichungstag der Anmeldung: **27.07.2005**
(21) Anmeldenummer: 04405047.4
(22) Anmeldetag: 26.01.2004
(51) Int. Cl.: H02H 9/04

(54) **Überspannungsschutzeinrichtung für einen Gleichspannungskreis und Umrichterschaltung mit einer solchen Überspannungsschutzeinrichtung**

(71) Anmelder: ABB Schweiz AG, 5400 Baden (CH)
(72) Erfinder: Rees, Jochen, 79761 Waldschut-Tiengen (DE); Stulz, Christian, 8008 Zürich (CH); Guggisberg, Adrian, 5301 Station Siggental (CH)
(74) Vertreter: ABB Patent Attorneys

(57) **Zusammenfassung**

Es wird eine Überspannungsschutzeinrichtung für einen Gleichspannungskreis (1) angegeben, welche einen spannungsabhängigen Widerstand (2) aufweist. Zum Schutz des Gleichspannungskreises (1) bei einer auftretenden Überspannung und zur Sicherstellung einer hohen Verfügbarkeit des Gleichspannungskreises (1) ist ein ansteuerbarer Leistungshalbleiterschalter (3) in Serie zu dem spannungsabhängigen Widerstand (2) geschaltet.

## Beschreibung

### Technisches Gebiet

Die Erfindung bezieht sich auf das Gebiet der elektrischen Schutztechnik. Sie geht aus von einer Überspannungsschutzeinrichtung für einen Gleichspannungskreis und von einer Umrichterschaltung mit einer solchen Überspannungsschutzeinrichtung gemäss dem Oberbegriff der unabhängigen Ansprüche.

### Stand der Technik

Umrichterschaltungen werden heute in einer Fülle von leistungselektronischen Anwendungen, wie z.B. in der Antriebstechnik für Bahnanwendungen oder in statischen Umformeinrichtungen eingesetzt. Eine solche Umrichterschaltung weist üblicherweise einen Gleichspannungskreis zur Speicherung elektrischer Energie auf, welcher einen Energiespeicher umfasst, der beispielsweise durch einen oder mehrere Kondensatoren gebildet ist. Ferner weist die Umrichterschaltung einen mit dem Gleichspannungskreis verbundenen Umrichter auf, welcher Umrichter eine Vielzahl von Leistungshalbleiterschaltern aufweist. Weiterhin ist der Gleichspannungskreis mittels einer Überspannungsschutzeinrichtung gegen auftretende Überspannungen geschützt, damit die Umrichterschaltung nicht beschädigt oder zerstört wird. Eine solche Überspannungsschutzeinrichtung ist beispielsweise durch eine Reihenschaltung einer Break-over-Diode mit einem Varistor oder durch eine Reihenschaltung einer Funkenstrecke mit einem Varistor gebildet. Eine durch eine Reihenschaltung einer Funkenstrecke mit einem Varistor gebildete Überspannungsschutzeinrichtung ist beispielsweise in "Überspannungsschutzmodul NM220V/5kA, 151193ALD02 80112, Copyright 1993 by Alarmcom Leutron GmbH" angegeben. Tritt nun eine Überspannung im Gleichspannungskreis und damit an der Überspannungsschutzeinrichtung auf, so entsteht bei Überschreiten einer definierten Schwellspannung, welche normalerweise oberhalb der maximalen Betriebsspannung des Gleichspannungskreises beziehungsweise der Umrichterschaltung liegt, ein Lichtbogen an der Funkenstrecke, durch welchen ein Strom über die Funkenstrecke fliesst, der dann auch über den Varistor fliesst und durch diesen Varistor begrenzt wird. Durch diesen Strom wird die auftretende Überspannung reduziert in dem der Varistor die in der Überspannung enthaltene Energie aufnimmt. Da der Varistor ein spannungsabhängiger Widerstand ist, der bei einer grossen Spannung einen kleinen Widerstand aufweist und bei einer kleinen Spannung hochohmig ist, wird der Strom über die Funkenstrecke und durch den Varistor zu Beginn der Überspannung gross sein und sich bei deren Reduzierung in erwünschter Weise verkleinern.

Problematisch bei einer vorstehend beschriebenen Überspannungsschutzeinrichtung ist, dass der Varistor auch bei einer bereits reduzierten Spannung und selbst noch bei Erreichen einer maximalen Einspeisespannung, beispielsweise eines elektrischen Versorgungsnetzes, für der Gleichspannungskreis noch Strom führt und dadurch der Lichtbogen der Funkenstrecke auch bei einer bereits reduzierten Spannung, d.h. bei der maximalen Einspeisespannung für den Gleichspannungskreis unkontrolliert weiterbrennt und demnach weiter einen Strom führt, der die Spannung des Gleichspannungskreises weiter reduziert. Diese Spannung kann aber nicht unter die maximale Einspeisespannung, welche beispielsweise über den Umrichter aus dem elektrischen Versorgungsnetz geliefert wird, absinken. Dadurch wird dem Varistor soviel Energie, insbesondere über einen längeren Zeitraum, zugeführt, dass dieser zerstört wird. Daher ist es notwendig, den Gleichspannungskreis von der Einspeisung zu trennen, so dass die Umrichterschaltung nicht mehr weiterbetrieben werden kann. Die Verfügbarkeit des Gleichspannungskreises und damit der gesamten Umrichterschaltung ist dadurch stark beeinträchtigt oder schlimmstenfalls nicht mehr gegeben.

### Darstellung der Erfindung

Aufgabe der Erfindung ist es deshalb, eine Überspannungsschutzeinrichtung für einen Gleichspannungskreis anzugeben, welche den Gleichspannungskreis bei einer auftretenden Überspannung ausreichend schützt und zudem eine hohe Verfügbarkeit des Gleichspannungskreises sicherstellt. Ferner ist eine Umrichterschaltung anzugeben, welche eine erfindungsgemässe Überspannungsschutzeinrichtung umfasst und deren Gleichspannungskreis bei einer auftretenden Überspannung ausreichend geschützt ist und desweiteren eine hohe Verfügbarkeit aufweist. Diese Aufgaben werden durch die Merkmale des Anspruchs 1 und 6 gelöst. In den abhängigen Ansprüchen sind vorteilhafte Weiterbildungen der Erfindung angegeben.

Die erfindungsgemässe Überspannungsschutzeinrichtung für einen Gleichspannungskreis weist einen spannungsabhängigen Widerstand auf. Erfindungsgemäss ist ein ansteuerbarer Leistungshalbleiterschalter in Serie zu dem spannungsabhängigen Widerstand geschaltet. Tritt nun eine Überspannung im Gleichspannungskreis und damit an der erfindungsgemässen Überspannungsschutzeinrichtung auf, so wird der ansteuerbare Leistungshalbleiterschalter bei Überschreiten einer definierten ersten Schwellspannung, welche vorzugsweise oberhalb der maximalen Betriebsspannung des Gleichspannungskreises beziehungsweise der Umrichterschaltung liegt, gezielt eingeschaltet, wodurch ein Strom über den ansteuerbaren Leistungshalbleiterschalter und den spannungsabhängigen Widerstand fliesst. Durch diesen Strom wird dann die auftretende Überspannung reduziert. Der spannungsabhängige Widerstand weist einen kleinen Widerstandswert bei einer grossen am spannungsabhängigen Widerstand anliegenden Spannung auf und ist bei einer kleinen Spannung hochohmig, so dass der Strom über den ansteuerbaren Leistungshalbleiterschalter und den spannungsabhängigen Widerstand zu Beginn der Überspannung gross ist und sich bei deren Reduzierung in erwünschtem Masse verkleinert. Der Strom kann zu Beginn der Überspannung ein Vielfaches des maximalen Abschaltstroms des ansteuerbaren Leistungshalbleiterschalters betragen. Vorteilhaft wird der Gleichspannungskreis bei einer auftretenden Überspannung somit durch die gezielte Einschaltung des ansteuerbaren Leistungshalbleiterschalters und die daraufhin folgende Reduzierung der Überspannung ausreichend geschützt. Sinkt nun die Spannung des Gleichspannungskreises infolge der vorstehend genannten Reduzierung unter eine zweite definierte Schwellspannung ab, so kann der ansteuerbare Leistungshalbleiterschalter gezielt ausgeschaltet werden, wodurch die Spannung des Gleichspannungskreises vorteilhaft nicht weiter absinkt und der spannungsabhängige Widerstand nicht zerstört wird. Dadurch kann vorteilhaft eine hohe Verfügbarkeit des Gleichspannungskreises, vor allem im Vergleich zu durch gängige Überspannungsschutzeinrichtungen geschützten Gleichspannungskreisen, erreicht werden. Die zweite definierte Schwellspannung liegt vorzugsweise zwischen der maximalen Betriebsspannung des Gleichspannungskreises und der maximalen Einspeisespannung, beispielsweise eines elektrischen Versorgungsnetzes, für den Gleichspannungskreis. Die zweite definierte Schwellspannung ist weiterhin so gewählt, dass der maximale Abschaltstroms des ansteuerbaren Leistungshalbleiterschalters unterschritten ist.

Die erfindungsgemässe Umrichterschaltung weist einen durch einen Energiespeicher gebildeten Gleichspannungskreis und einen mit dem Gleichspannungskreis verbundenen Umrichter auf, welcher Umrichter eine Vielzahl von Leistungshalbleiterschaltern umfasst, wobei eine erfindungsgemässe Überspannungsschutzeinrichtung parallel zu dem Energiespeicher geschaltet ist. Vorteilhaft ist der Gleichspannungskreis der erfindungsgemässen Umrichterschaltung und die Leistungshalbleiterschalter des Umrichters der Umrichterschaltung durch den Einsatz der erfindungsgemässen Überspannungsschutzeinrichtung bei einer auftretenden Überspannung ausreichend geschützt. Desweiteren kann durch das gezielte Abschalten des ansteuerbaren Leistungshalbleiterschalters, wie bereits erwähnt, ein weiteres Absinken der Spannung des Gleichspannungskreises und eine Zerstörung des spannungsabhängigen Widerstandes verhindert werden, so dass die Betriebsspannung des Gleichspannungskreises vorteilhaft schon bereits nach kurzer Zeit wieder zur Verfügung steht und die Umrichterschaltung sehr schnell im Normalbetrieb weiterbetrieben werden kann. Dadurch erhöht sich die Verfügbarkeit der erfindungsgemässen Umrichterschaltung, insbesondere im Vergleich zu mit gängigen Überspannungsschutzeinrichtungen versehenen Umrichterschaltungen, signifikant.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:

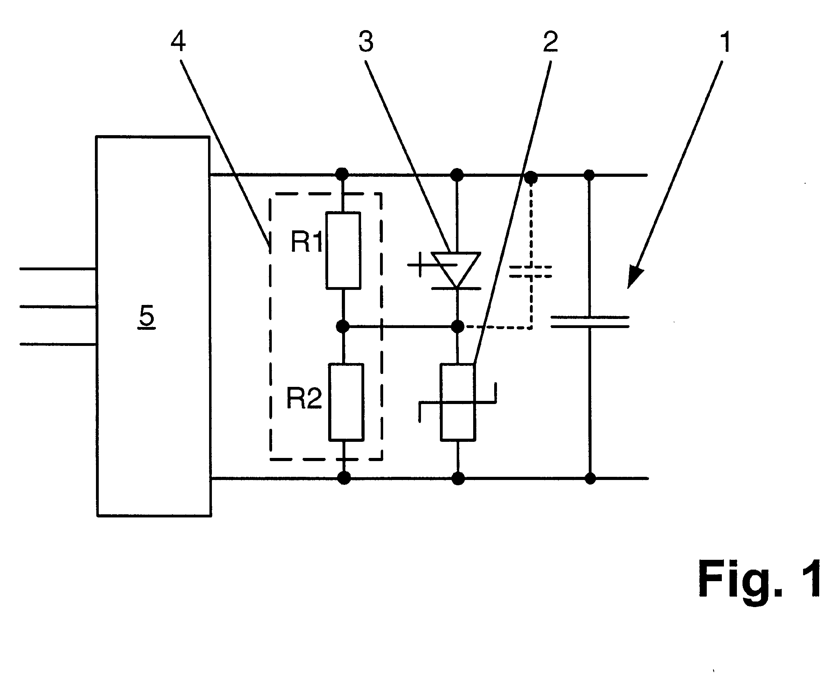

- Fig. 1: eine Ausführungsform einer erfindungsgemässen Umrichterschaltung.

Die in der Zeichnung verwendeten Bezugszeichen und deren Bedeutung sind in der Bezugszeichenliste zusammengefasst aufgelistet. Grundsätzlich sind in der Figur gleiche Teile mit gleichen Bezugszeichen versehen. Die beschriebene Ausführungsform steht beispielhaft für den Erfindungsgegenstand und hat keine beschränkende Wirkung.

### Wege zur Ausführung der Erfindung

In Fig. 1 ist eine Ausführungsform einer erfindungsgemässen Umrichterschaltung gezeigt. Die erfindungsgemässe Umrichterschaltung weist gemäss Fig. 1 einen durch einen Energiespeicher gebildeten Gleichspannungskreis 1 und einen mit dem Gleichspannungskreis 1 verbundenen Umrichter 5 auf, welcher Umrichter 5 eine Vielzahl von Leistungshalbleiterschaltern umfasst. Darüber hinaus ist eine erfindungsgemässe Überspannungsschutzeinrichtung für den Gleichspannungskreis 1 vorgesehen, die nachfolgend detailliert beschrieben wird. Die erfindungsgemässe Überspannungsschutzeinrichtung weist gemäss Fig. 1 einen spannungsabhängigen Widerstand 2 auf. Erfindungsgemäss ist ein ansteuerbarer Leistungshalbleiterschalter 3 in Serie zu dem spannungsabhängigen Widerstand 2 geschaltet. Bei Auftreten einer Überspannung im Gleichspannungskreis 1 und damit an der erfindungsgemässen Überspannungsschutzeinrichtung wird der ansteuerbare Leistungshalbleiterschalter 3 bei Überschreiten einer definierten ersten Schwellspannung gezielt eingeschaltet. Die Überwachung der definierten ersten Schwellspannung und die vorstehend beschriebene Einschaltung des ansteuerbaren Leistungshalbleiterschalters 3 erfolgt vorteilhaft durch die normalerweise bereits vorhandene Messeinrichtung zur Überwachung der Spannung des Gleichspannungskreises 1. Die definierte erste Schwellspannung liegt oberhalb der maximalen Betriebsspannung des Gleichspannungskreises 1 beziehungsweise der Umrichterschaltung. Durch das Einschalten des ansteuerbaren Leistungshalbleiterschalters 3 fliesst ein Strom über den ansteuerbaren Leistungshalbleiterschalter 3 und den spannungsabhängigen Widerstand 2, der dann die auftretende Überspannung reduziert. Der spannungsabhängige Widerstand 2 weist einen kleinen Widerstandswert bei einer grossen Spannung am spannungsabhängigen Widerstand 2 auf und ist bei einer kleinen Spannung hochohmig, so dass der Strom über den ansteuerbaren Leistungshalbleiterschalter 3 und den spannungsabhängigen Widerstand 2 zu Beginn der Überspannung gross ist und sich bei deren Reduzierung in erwünschtem Masse verkleinert. Mit Vorteil wird der Gleichspannungskreis 1 bei einer auftretenden Überspannung damit mittels der gezielten Einschaltung des ansteuerbaren Leistungshalbleiterschalters 3 und die daraufhin folgende Reduzierung der Überspannung ausreichend geschützt. Sinkt nun die Spannung des Gleichspannungskreises 1 infolge der vorstehend genannten Reduzierung bis zu einer zweiten definierten Schwellspannung, die vorzugsweise zwischen der maximalen Betriebsspannung des Gleichspannungskreises 1 und der maximalen Einspeisespannung, beispielsweise eines elektrischen Versorgungsnetzes, für den Gleichspannungskreis 1 liegt, ab, so wird der ansteuerbare Leistungshalbleiterschalter 3 gezielt ausgeschaltet, so dass die Spannung des Gleichspannungskreises 1 vorteilhaft nicht weiter absinkt und der spannungsabhängige Widerstand 2 nicht zerstört wird. Vorteilhaft kann dadurch eine hohe Verfügbarkeit des Gleichspannungskreises 1 erreicht werden, da die Betriebsspannung des Gleichspannungskreises 1 schon nach kurzer Zeit wieder zur Verfügung steht. Die zweite definierte Schwellspannung ist weiterhin so gewählt, dass der maximale Abschaltstroms des ansteuerbaren Leistungshalbleiterschalters 3 unterschritten ist. Die Überwachung der definierten zweiten Schwellspannung und die vorstehend beschriebene Abschaltung des ansteuerbaren Leistungshalbleiterschalters 3 erfolgt vorteilhaft durch die normalerweise bereits vorhandene Messeinrichtung zur Überwachung der Spannung des Gleichspannungskreises 1.

Vorzugsweise ist der spannungsabhängige Widerstand 2 ein Varistor. Es ist aber auch denkbar, dass der spannungsabhängige Widerstand 2 ein VDR (Voltage dependent resistor) oder ein Thyrit-Widerstand ist.

Mit Vorteil ist der spannungsabhängige Widerstand 2 derart ausgebildet, d.h. derart dimensioniert, dass der spannungsabhängige Widerstand 2 einen Strom bei einer auftretenden Überspannung zur Verhinderung des weiteren Anstiegs der Überspannung führt beziehungsweise führen kann. Dadurch kann eine Beschädigung oder Zerstörung des Gleichspannungskreises 1 und/oder der Leistungshalbleiterschalter des Umrichters infolge eines weiteren Anstiegs der Spannung des Gleichspannungskreises 1 erfolgreich vermieden werden. Zudem ist der spannungsabhängige Widerstand 2 derart ausgebildet, d.h. derart dimensioniert, dass bei der definierten zweiten Schwellspannung, welche ,wie bereits erwähnt, zwischen der maximalen Betriebsspannung des Gleichspannungskreises 1 und der maximalen Einspeisespannung für den Gleichspannungskreis 1 liegt, ein Strom durch den spannungsabhängigen Widerstand 2 und den ansteuerbaren Leistungshalbleiterschalter 3 fliesst, welcher unterhalb des maximalen Abschaltstromes des ansteuerbaren Leistungshalbleiterschalters 3 liegt. Dadurch kann gewährleistet werden, dass der bei der maximalen Einspeisespannung für den Gleichspannungskreises 1 fliessende Strom auch tatsächlich vom ansteuerbaren Leistungshalbleiterschalter 3 abgeschaltet werden kann und der Gleichspannungskreis 1 nach einer auftretenden Überspannung spannungsmässig wieder schnell verfügbar ist.

Es hat sich als sehr vorteilhaft erwiesen, dass der ansteuerbare Leistungshalbleiterschalter 3 ein Abschaltthyristor ist, wobei der Abschaltthyristor vorzugsweise ein integrierter über die Ansteuerelektrode kommutierter Thyristor ist. Ein solcher Thyristor ist vorteilhaft hart angesteuert und weist einen niederinduktiv aufgebauten Ansteuerkreis auf. Es ist aber auch denkbar, dass der Abschaltthyristor ein Gate-Turn-OFF-Thyristor ist.

Gemäss Fig. 1 ist ein ohmscher Spannungsteiler 4 parallel zu der Serienschaltung des ansteuerbaren Leistungshalbleiterschalters 3 mit dem spannungsabhängigen Widerstand 2 geschaltet. Dabei ist der Verbindungspunkt der beiden Widerstände R1, R2 des ohmschen Spannungsteilers 4 mit dem Verbindungspunkt des ansteuerbaren Leistungshalbleiterschalters 3 mit dem spannungsabhängigen Widerstand 2 verbunden. Mittels des ohmschen Spannungsteilers 4, insbesondere durch die Wahl der Werte der Widerstände R1, R2 des ohmschen Spannungsteilers 1, ist die statische Spannungsaufteilung am ansteuerbaren Leistungshalbleiterschalter 3 und am spannungsabhängigen Widerstand 2 vorteilhaft frei wählbar. Dies ermöglicht es, ansteuerbare Leistungshalbleiterschalter 3 zu wählen, deren Spannungsfestigkeit unterhalb der maximalen Betriebsspannung des Gleichspannungskreises 1 liegt, da der ansteuerbare Leistungshalbleiterschalter 3 bei entsprechend gewähltem Widerstandsverhältnis des ohmschen Spannungsteilers 4 dann nicht die gesamte maximale Betriebsspannung des Gleichspannungskreises 1 sperren muss. Vorteilhaft kann der ansteuerbare Leistungshalbleiterschalter 3 damit bezüglich seiner Baugrösse klein und sehr kostengünstig ausgeführt werden. Weiterhin kann auch der allfällige Leckstrom des ansteuerbaren Leistungshalbleiterschalters 3 vorteilhaft hauptsächlich über den ohmschen Spannungsteiler 4 abfliessen, so dass der spannungsabhängige Widerstand 2 nicht oder nicht nennenswert durch den Leckstrom belastet wird.

Gemäss Fig. 1 kann als Abschaltentlastung optional ein Kondensator parallel zum ansteuerbaren Leistungshalbleiterschalters 3 geschaltet werden, so dass der ansteuerbare Leistungshalbleiterschalter 3 bei Abschalten vorteilhaft nur gering belastet wird.

Wie bereits erwähnt, weist die erfindungsgemässe Umrichterschaltung gemäss Fig. 1 den durch einen Energiespeicher gebildeten Gleichspannungskreis 1 und den mit dem Gleichspannungskreis 1 verbundenen Umrichter 5 auf, welcher Umrichter 5 eine Vielzahl von Leistungshalbleiterschaltern umfasst. Der Energiespeicher umfasst, wie in Fig. 1 gezeigt, einen Kondensator, kann aber allgemein auch mehrerer Kondensatoren umfassen. Gemäss Fig. 1 weist die Umrichterschaltung eine erfindungsgemässe und vorstehend beschriebene Überspannungsschutzeinrichtung auf, welche parallel zu dem Energiespeicher geschaltet ist. Neben den bereits bei der Beschreibung der erfindungsgemässen Überspannungsschutzeinrichtung erwähnten Vorteilen ist der Gleichspannungskreis 1 der erfindungsgemässen Umrichterschaltung und die Leistungshalbleiterschalter des Umrichters 5 der Umrichterschaltung durch den Einsatz der erfindungsgemässen Überspannungsschutzeinrichtung bei einer auftretenden Überspannung mit Vorteil ausreichend geschützt. Darüberhinaus kann durch das gezielte Abschalten des ansteuerbaren Leistungshalbleiterschalters, wie bereits erwähnt, ein weiteres Absinken der Spannung des Gleichspannungskreises verhindert werden, so dass die Betriebsspannung des Gleichspannungskreises vorteilhaft schon bereits nach kurzer Zeit wieder zur Verfügung steht und die Umrichterschaltung sehr schnell im Normalbetrieb weiterbetrieben werden kann. Dadurch kann die Verfügbarkeit der erfindungsgemässen Umrichterschaltung entscheidend erhöht werden.

### Bezugszeichenliste

- 1: Gleichspannungskreis
- 2: spannungsabhängiger Widerstand
- 3: ansteuerbarer Leistungshalbleiterschalter
- 4: ohmscher Spannungsteiler
- 5: Umrichter

## Patentansprüche

1. Überspannungsschutzeinrichtung für einen Gleichspannungskreis (1), welche einen spannungsabhängigen Widerstand (2) aufweist, **dadurch gekennzeichnet, dass** ein ansteuerbarer Leistungshalbleiterschalter (3) in Serie zu dem spannungsabhängigen Widerstand (2) geschaltet ist.

2. Umrichterschaltung nach Anspruch 1, **dadurch gekennzeichnet, dass** der spannungsabhängige Widerstand (2) derart ausgebildet ist, dass der spannungsabhängige Widerstand (2) einen Strom bei einer auftretenden Überspannung zur Verhinderung des weiteren Anstiegs der Überspannung führt und bei einer Spannung, welche zwischen der maximalen Betriebsspannung des Gleichspannungskreises (1) und der maximalen Einspeisespannung für den Gleichspannungskreis (1) liegt, ein Strom durch den spannungsabhängigen Widerstand (2) und den ansteuerbaren Leistungshalbleiterschalter (3) fliesst, welcher unterhalb des maximalen Abschaltstromes des ansteuerbaren Leistungshalbleiterschalters (3) liegt.

3. Umrichterschaltung nach Anspruch 1 oder 2, **dadurch gekennzeichnet, dass** der ansteuerbare Leistungshalbleiterschalter (3) ein Abschaltthyristor ist.

4. Umrichterschaltung nach Anspruch 3, **dadurch gekennzeichnet, dass** der Abschaltthyristor ein integrierter über die Ansteuerelektrode kommutierter Thyristor ist.

5. Umrichterschaltung nach einem der vorhergehenden Ansprüche, **dadurch gekennzeichnet, dass** ein ohmscher Spannungsteiler (4) parallel zu der Serienschaltung des ansteuerbaren Leistungshalbleiterschalters (3) mit dem spannungsabhängigen Widerstand (2) geschaltet ist.

6. Umrichterschaltung mit einem durch einen Energiespeicher gebildeten Gleichspannungskreis (1) und mit einem mit dem Gleichspannungskreis (1) verbundenen Umrichter (5), welcher Umrichter (5) eine Vielzahl von Leistungshalbleiterschaltern aufweist, **dadurch gekennzeichnet,**
**dass** eine Überspannungsschutzeinrichtung nach einem der Ansprüche 1 bis 5 parallel zu dem Energiespeicher geschaltet ist.
